# EUROPÄISCHE PATENTSCHRIFT

(11) **EP 3 772 201 B1**
(45) Veröffentlichungstag und Bekanntmachung des Hinweises auf die Patenterteilung: **20.12.2023**
(21) Anmeldenummer: 20187165.4
(22) Anmeldetag: 22.07.2020
(51) Int. Cl.: H04L 12/28

(54) **VERFAHREN ZUR AUTOMATISCHEN BEREITSTELLUNG VON BENUTZERBEZOGENEN DATEN UNTER VERWEDNUNG EINES HEIMNETZWERKS SOWIE EIN COMPUTERPROGRAMM**
METHOD FOR AUTOMATICALLY PROVIDING USER-RELATED DATA USING A HOME NETWORK AND A COMPUTER PROGRAM
PROCÉDÉ DE FOURNITURE AUTOMATIQUE DE DONNÉES RELATIVES À L'UTILISATEUR À L'AIDE D'UN RÉSEAU DOMESTIQUE AINSI QUE PROGRAMME INFORMATIQUE

(30) Priorität: 31.07.2019 DE 102019120727
(43) Veröffentlichungstag der Anmeldung: 03.02.2021
(73) Patentinhaber: Deutsche Telekom AG, 53113 Bonn (DE)
(72) Erfinder: STEPANEK, Nicolas Walter, 64385 Reichelsheim (DE)
(74) Vertreter: Blumbach · Zinngrebe Patentanwälte PartG mbB

(56) Entgegenhaltungen:
- EP-A1- 2 833 596
- EP-A1- 2 913 961
- DE-A1-102013 219 054
- DE-A1-102016 207 919

## Beschreibung

Die Erfindung betrifft ein Verfahren zur automatischen Bereitstellung von benutzerbezogenen Daten unter Verwendung eines Heimnetzwerkes, ein Heimnetzwerk und ein Computerprogramm zur Ausführung eines solchen Verfahrens.

Smart Home und Heimnetzwerke dienen als Technologien für technische Verfahren und Systeme in Wohnräumen und Wohnhäusern, mit denen unter anderem netzwerkfähige Endgeräte der Unterhaltungselektronik miteinander vernetzt werden können, wobei den netzwerkfähigen Endgeräten über ein Heimnetzwerk auch ein Internetzugang bereitgestellt werden kann. Immer häufiger werden in eine Smart-Home-Umgebung intelligente Lautsprecher, auch als Smart Speaker bekannt, eingebunden, die mit dem Internet verbunden sind. Allerdings reagieren solche intelligenten Lautsprecher lediglich auf von einem Nutzer geäußerte Sprachbefehle. Beispiele für solche sprachgesteuerte und internetbasierte Lautsprecher sind beispielsweise "Amazon Echo" und "Hallo Magenta".

Aus EP 2 913 961 A1 ist ein Verfahren zur Fernsteuerung und/oder Fernüberwachung des Betriebs eines Haushaltsgeräts mithilfe eines Kommunikationsgeräts eines Benutzers bekannt, wobei das Haushaltsgerät an ein lokales Heimnetzwerk angebunden ist und das Kommunikationsgerät mit einem Internetserver kommuniziert, auf welchem ein Benutzerkonto des Benutzers geführt wird, auf welchem Daten bezüglich des Haushaltsgeräts abgelegt sind, und wobei die Fernsteuerung und/oder Fernüberwachung des Haushaltsgeräts durch das Kommunikationsgerät unter Zugriff auf die Daten des Benutzerkontos und unter Vermittlung des lokalen Heimnetzwerks erfolgt.

Der Erfindung liegt die Aufgabe zugrunde, ein Verfahren, ein Heimnetzwerk sowie ein Computerprogramm zur automatischen Bereitstellung von benutzerbezogenen Daten unter Verwendung eines Heimnetzwerkes zur Verfügung zu stellen, die eine proaktive maschinenbasierte Kommunikation, die ohne menschliche Sprachbefehle erfolgen kann, ermöglichen.

Ein Kerngedanke der Erfindung kann darin gesehen werden, benutzerbezogene Daten in Abhängigkeit von der Anwesenheit eines menschlichen Nutzers bzw. einer ihm zugeordneten mobilen drahtlosen Kommunikationsendeinrichtung in einem Heimnetzwerk automatisch, d.h. proaktiv, einer akustischen und/oder optischen Ausgabeeinrichtung, die mit dem Heimnetzwerk verbunden ist, bereitzustellen. Die Person muss hierzu keine Sprachbefehle äußern oder sonstige Anweisungen manuell am Heimnetzwerk eingeben. Mit anderen Worten: sobald eine mobile drahtlose Kommunikationsendeinrichtung und somit indirekt dessen Nutzer vom Heimnetzwerk erkannt und identifiziert wird, wird automatisch eine maschinenbasierte Kommunikation oder ein benutzerbezogener Dienst gestartet.

Das oben genannte technische Problem wird mit den Verfahrensschritten des Anspruchs 1, den Merkmalen des Anspruchs 10 und den Merkmalen des Anspruchs 11 gelöst.

Vorteilhafte Weiterbildungen sind Gegenstand der Unteransprüche.

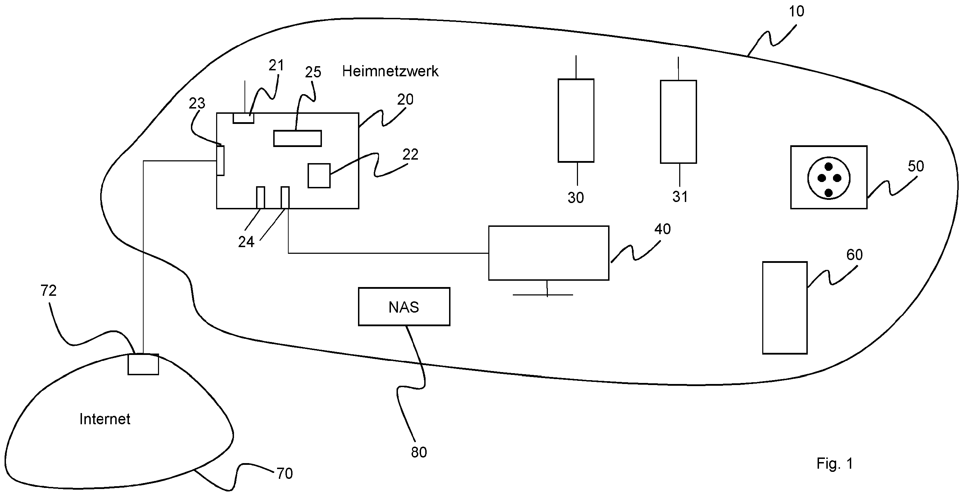

Die Erfindung wird nachfolgend anhand einer einzigen Figur 1 näher erläutert.

In Figur 1 ist ein beispielhaftes Heimnetzwerk 10 dargestellt, welches ein lokales drahtloses und/oder drahtgebundenes Netz aufweist, über das netzwerkfähige Endgeräte, wie zum Beispiel ein intelligentes TV-Gerät 40, eine intelligente Steckdose 50, ein intelligenter Lautsprecher 60, eine netzgebundene Speichereinrichtung 80 (NAS: Network Attached Storage) und mobile drahtlose Kommunikationsendgeräte wie zum Beispiel die gezeigten Smartphones 30 und 31, miteinander verbunden sein können. Das Heimnetzwerk 10 kann ferner wenigstens eine elektronische Zugangseinrichtung 20 aufweisen, in der eine drahtlose, vorzugsweise WLAN-basierte Kommunikationsschnittstelle 21, LAN-basierte Ports 24 und eine weitere Kommunikationsschnittstelle 23 zum Anschluss an das Internet implementiert sein können. Über die drahtlose Kommunikationsschnittstelle 21 können drahtlose Endgeräte, wie zum Beispiel die Smartphones 30 und 31 mit dem Heimnetzwerk 10 verbunden werden, während an die LAN-Ports 24 drahtgebundene netzwerkfähige Endgeräte, wie zum Beispiel das intelligente T-Gerät 40, angeschlossen werden können.

Angemerkt sei, dass es sich bei den beiden Smartphones 30 und 31 um herkömmliche Smartphones handeln kann, die u.a. jeweils über eine eigene SIM-Karte zur Kommunikation über ein öffentliches Mobilfunknetz und eine WLAN-Schnittstelle verfügen können. Ferner sei angemerkt, dass es sich bei der elektronischen Zugangseinrichtung 20 um einen Internet-Zugangs-Router (IAR von Internet Access Router) handeln kann, über den das Heimnetzwerk 10 über die Kommunikationsschnittstelle 23 mit dem Internet 70 verbunden werden kann. Hierzu kann die Kommunikationsschnittstelle 23 der elektronischen Zugangseinrichtung 20 in herkömmlicher Weise mit einem Internetanschluss 72 eines Providers verbunden werden.

In der netzgebundenen Speichereinrichtung 80 können beispielsweise benutzerbezogene Daten, wie zum Beispiel Steuerdaten und Mediendaten, insbesondere Sprachdaten und/oder Textdaten und/oder Videodaten und/oder Musikdaten gespeichert werden. Benutzerbezogene Daten sind Daten, die wenigstens einer mobilen drahtlosen Kommunikationsendeinrichtung und somit wenigstens einem Nutzer zugeordnet sind. Der Einfachheit halber werden nachfolgend hauptsächlich nur benutzerbezogene Daten des Smartphones 30 bzw. dessen Nutzers betrachtet, wobei auch benutzerbezogene Daten des Smartphones 31 gespeichert und verarbeitet werden können.

Angemerkt sei, dass je nach Implementierung beispielsweise benutzerbezogene Daten in der netzgebundenen Speichereinrichtung 80 des Heimnetzwerks 10 und/oder in der elektronischen Zugangseinrichtung 20 und/oder in wenigstens einem der mit dem Heimnetzwerk 10 verbundenen netzwerkfähigen Endgeräten und/oder im Internet 70 abgelegt werden können.

Der Betrieb des Heimnetzwerks 10 und der mit ihm verbundenen netzwerkfähigen Endgeräte 30, 31, 40, 50, 60 und 80 kann mit oder ohne Einbindung des Internets 70 durch eine in der elektronischen Zugangseinrichtung 20 implementierten Steuereinheit 22 erfolgen, die hierzu ein beispielsweise in der elektronischen Zugangseinrichtung 20 gespeichertes Anwendungs- und/oder Steuerprogramm ausführen kann. Die Steuereinheit 22 kann als Mikrocontroller ausgebildet sein.

In an sich bekannter Weise können die netzwerkfähigen Endgeräte des Heimnetzwerkes 10, insbesondere der intelligente Lautsprecher 60, unter Verwendung einer vom Internet-Provider zugeteilten öffentlichen IP-Adresse über die Kommunikationsschnittstelle 23 mit dem Internet 70 kommunizieren.

Die Funktions- und Arbeitsweise des in Figur 1 beispielhaft gezeigten Heimnetzwerkes 10 wird nachfolgend detaillierter erläutert.

Um Informationen, die der mobilen drahtlosen Kommunikationsendeinrichtung 30 und gegebenenfalls auch der mobilen drahtlosen Kommunikationsendeinrichtung 31 zugeordnet sind, von Informationen der anderen netzwerkfähigen Endgeräten 40, 50, 60 des Heimnetzwerkes 10 unterscheiden zu können, kann in der elektronischen Zugangseinrichtung 20 eine Filterfunktion gespeichert werden. Bei den Informationen kann es sich um Information für den Endnutzer, wie zum Beispiel abonnierte Sportnachrichten, persönliche Sprachnachrichten Nachrichten von Smart Home-Geräten oder Informationen für die Kommunikationsendeinrichtung handeln. Die Filterfunktion kann dafür sorgen, dass die elektronische Zugangseinrichtung 20 nur benutzerbezogene Daten, die den mobilen drahtlosen Kommunikationsendeinrichtung 30 und 31 zugeordnet sind, berücksichtigt werden. Die Filterfunktion kann in einem Speicher 25 der elektronischen Zugangseinrichtung 20 zusammen mit Anwendungs- und Steuerungsprogrammen zur Steuerung des Heimnetzwerks 10 abgelegt sein.

Weiterhin sei angenommen, dass benutzerbezogenen Daten für den Nutzer des Smartphones 30 beispielsweise in der netzgebundenen Speichereinrichtung 80 hinterlegt sind. Wie bereits erwähnt, kann es sich bei den benutzerbezogenen Daten um Mediendaten, insbesondere Sprachdaten und/oder Textdaten und/oder Videodaten und/oder um Steuerdaten handeln. Die Steuerdaten können unter anderem Anweisungen zur Ausführung vorbestimmter Dienste, wie zum Beispiel das Einschalten des TV-Geräts 40 und das Auswählen eines vorbestimmten Fernsehprogramms zur Wiedergabe über das TV-Gerät 40 enthalten. Die Steuerdaten werden vorzugsweise von der Steuereinheit 22 der elektronischen Zugangseinrichtung 20 ausgeführt. Sprachdaten und/oder Textdaten können folgende beispielhafte Inhalte repräsentieren: "Willkommen zu Hause, Peter", sofern der Nutzer des Smartphones 30 Peter heißt. Weitere Sprach- und/oder Textinhalte können sein: "Hallo Peter, für dich sind Anrufe eingegangen".

Den gespeicherten benutzerbezogenen Daten kann insbesondere eine Identifikation des Smartphones 30 zugeordnet sein, die ebenfalls beispielsweise in dem netzgebundenen Speicher 80 zusammen mit den benutzerbezogenen Daten abgelegt ist. Mit Hilfe der Identifikation können die gespeicherten benutzerbezogenen Daten korrekt aufgefunden werden. Als Identifikation können vorzugsweise eindeutig auf die entsprechende Kommunikationsendeinrichtung zurückführbare Daten oder eine Kombination aus diesen verwendet werden. Beispielhaft denkbar wären IP- oder MAC-Adressen, Gerätetyp, ein individueller Name, die Mobilfunknummer oder IMEI (International Mobile Equipment Identity, oder die SIM-Kartennummer der jeweiligen Kommunikationsendeinrichtung.

Nunmehr wird ein beispielhaftes Szenario gemäß der Erfindung erläutert, bei dem beispielsweise über den intelligenten Lautsprecher 60 automatisch die benutzerbezogene sprachliche Äußerung "Willkommen zu Hause, Peter" ausgegeben werden soll, sobald das Smartphone 30 vom Heimnetzwerk 10 bzw. von der wenigstens einen elektronischen Zugangseinrichtung 20 detektiert und identifiziert worden ist.

Angenommen sei nunmehr, dass das Smartphone 30 in den Versorgungsbereich des Heimnetzwerkes 10 bzw. der elektronischen Zugangseinrichtung 20 gelangt ist, sodass sich das Smartphone 30 über die drahtlose Kommunikationsschnittstelle 21 an der elektronischen Zugangseinrichtung 20 anmelden kann. Um dies zu ermöglichen, ist die elektronische Zugangseinrichtung 20 dazu ausgebildet, das Smartphone 10 bei Eintritt in dessen Versorgungsbereich zu detektieren und als zulässige und berechtigte Entität zu identifizieren. Hierzu kann das Smartphone 30 eine eindeutige Identifikation, die auch in der elektronischen Zugangseinrichtung 20, zum Beispiel im Speicher 25 gespeichert sein kann, zur elektronischen Zugangseinrichtung 20 übertragen oder die eindeutige Identifikation kann abgefragt bzw. automatisiert ermittelt werden.

Gemäß einer beispielhaften Implementation kann vorgesehen sein, dass, sobald das Smartphone 30 vom Heimnetzwerk 10 bzw. von der drahtlosen Kommunikationsschnittstelle 20 identifiziert worden ist, die sprachliche Äußerung "Willkommen zu Hause, Peter" über den intelligenten Lautsprecher 60 ausgegeben wird. Dies kann dadurch erreicht werden, dass die elektronische Zugangseinrichtung 20 dazu ausgebildet ist, unter Ansprechen auf die Identifikation des Smartphones 30 ein im Speicher 25 hinterlegtes Anwendungsprogramm auszuführen. Unter Ausführung des Anwendungsprogramms veranlasst die elektronische Zugangseinrichtung 20, dass die entsprechenden benutzerbezogenen Sprachdaten, nämlich "Willkommen zu Hause, Peter", aus der netzgebundenen Speichereinrichtung 80 ausgelesen und zum intelligenten Lautsprecher 60 zur akustischen Ausgabe übertragen werden.

Je nach Implementierung ist auch denkbar, dass unter Ausführung des Anwendungsprogramms die elektronische Zugangseinrichtung 20 alternativ oder zusätzlich veranlasst, dass die entsprechenden benutzerbezogenen Textdaten, nämlich "Willkommen zu Hause, Peter", aus der netzgebundenen Speichereinrichtung 80 ausgelesen und beispielsweise zum Smartphone 30 zur optischen Anzeige übertragen werden. Gemäß dem erläuterten Prozedere wird dem Nutzer des Smartphone 30 akustisch über den Lautsprecher 60 und/oder optisch über das Display des Smartphones 30 eine Begrüßungsformel ausgegeben, und zwar ohne dass der Nutzer des Smartphones 30 einen Sprachbefehl oder manuell eine Anweisung am Heimnetzwerk 10 eingegeben hat.

Das beschriebene Verfahren sorgt somit für eine proaktive maschinenbasierte Kommunikation über den intelligenten Lautsprecher 60 mit dem Nutzer des Smartphones 30, sobald dieser bzw. das Smartphone 30 vom Heimnetzwerk erfasst und identifiziert worden ist.

Angemerkt sei, dass die elektronische Zugangseinrichtung 20 auch dazu ausgebildet sein kann, die entsprechenden benutzerbezogenen Sprach- und/oder Textdaten aus dem Internet 70 runterzuladen und die Übertragung zum intelligenten Lautsprecher 60 zu veranlassen, falls die Daten dort gespeichert sind.

Nunmehr wird ein zweites beispielhaftes Szenario gemäß der Erfindung erläutert, bei dem das Verhalten des Nutzers 30 sozusagen protokolliert und in Form von benutzerbezogenen Daten beispielsweise im netzgebundenen Speicher 80 zusätzlich hinterlegt und gegebenenfalls auch von Zeit zu Zeit aktualisiert werden kann.

So ist beispielsweise denkbar, dass der Nutzer des Smartphones 30, sobald er nach Hause kommt, sein intelligentes TV-Gerät 40 einschaltet und sich ein vorbestimmtes TV-Programm ansieht. Dieses Verhalten kann durch entsprechend erzeugte Steuerdaten hinsichtlich des Nutzers des Smartphones 30 im netzgebundenen Speicher 80 als benutzerbezogene Daten gespeichert werden. Hierzu kann das TV-Gerät 40 Informationen zur elektronischen Zugangseinrichtung 20 übertragen, die signalisieren, dass das TV-Gerät 40 eingeschaltet und das bestimmte Programm ausgewählt worden ist. Die elektronische Zugangseinrichtung 20 kann dazu ausgebildet sein, die entsprechenden Steuerdaten aus der netzgebundenen Speichereinrichtung 80 auszulesen, das TV-Gerät 40 einzuschalten und das vorbestimmte TV-Programm auszuwählen, sobald das Smartphone 30 detektiert und identifiziert worden ist.

Gemäß einem weiteren beispielhaften Szenario gemäß der Erfindung kann beispielsweise die elektronische Zugangseinrichtung 20 dazu ausgebildet sein, dem Nutzer des Smartphones 30 über den intelligenten Lautsprecher 60 eine Liste von Benutzernamen zuzurufen, deren mobile drahtlose Kommunikationseinrichtungen, zum Beispiel die mobile drahtlose Kommunikationseinrichtung 31, alle schon vom Heimnetzwerk 10 bzw. der elektronischen Zugangseinrichtung 20 erfasst und identifiziert worden sind, sobald das Smartphone 30 vom Heimnetzwerk 10 detektiert und identifiziert worden ist. Angemerkt sei, dass beispielsweise das Smartphone 31 bereits von der elektronischen Zugangseinrichtung 20 erfasst und identifiziert worden und hinsichtlich des Smartphones 31 die benutzerbezogene Sprachäußerung "Jochen ist bereits zu Hause" in dem netzgebundenen Speicher 80 hinterlegt ist. In diesem Fall kann elektronische Zugangseinrichtung 20 veranlassen, dass, sobald das Smartphone 30 des Benutzers Peter vom Heimnetzwerk 10 detektiert und identifiziert worden ist, die Sprachansage "Jochen ist bereits zu Hause" über den Lautsprecher 60 ausgegeben wird.

Gemäß einer weiteren im Heimnetzwerk 10 bzw. in der elektronischen Zugangseinrichtung 20 implementierten Anwendung können zum Beispiel zeitabhängig vorbestimmte benutzerbezogene Dienste gestartet und ausgeführt werden.

Es ist beispielsweise denkbar, dass die elektronische Zugangseinrichtung 20 unter Ansprechen auf die dem Smartphone 30 zugeordneten benutzerbezogene Daten, die in der netzgebundenen Speichereinrichtung 80 gespeichert sein können, ein besonderes Musikstreaming im Internet 70 startet, welches über den Lautsprecher 60 ausgegeben werden soll, sofern sich das Smartphones 30 zu einer vorbestimmten Uhrzeit im Heimnetzwerk 10 befindet.

Gemäß einem weiteren beispielhaften Szenario gemäß der Erfindung kann das Heimnetzwerk 10 bzw. die elektronische Zugangseinrichtung 20 dazu konfiguriert sein, eine vorbestimmte Textnachricht als benutzerbezogene Daten, die in dem netzgebundenen Speicher 80 gespeichert sind, zum Smartphone 30 zu übertragen und dort optisch und/oder akustische dem Nutzer auszugehen, sobald das Smartphone 30 vom Heimnetzwerk 10 identifiziert worden ist.

Gemäß einem weiteren beispielhaften Szenario gemäß der Erfindung können beispielsweise von der elektronischen Zugangseinrichtung 20 die für den Nutzer des Smartphones 30 an seinem Festnetzanschluss entgangenen Anrufe über den intelligenten Lautsprecher 60 akustisch oder auch am Smartphone 30 selbst optisch und/oder akustisch ausgegeben werden, sobald das Smartphone 30 vom Heimnetzwerk 10 detektiert und identifiziert worden ist.

Es versteht sich, dass das zuvor beschriebene Verfahren auch für weitere Nutzer anderer Smartphones oder personenbezogene Kommunikationsendeinrichtungen, wie zum Beispiel des Smartphones 31, anwendbar ist, für die benutzerbezogenen Daten im Heimnetzwerk 10 und/oder im Internet 70 abgelegt worden sind, und die in der elektronischen Zugangseinrichtung 20 als berechtigte Teilnehmer registriert worden sind.

Die Aspekte der Erfindung werden nachfolgend noch einmal zusammengefasst.

Gemäß einem beispielhaften Aspekt wird ein Verfahren zur automatischen Bereitstellung von benutzerbezogene Daten unter Verwendung eines Heimnetzwerkes 10, welches wenigstens eine elektronische Zugangseinrichtung 20 mit einer drahtlosen Kommunikation Schnittstelle 21 aufweist, bereitgestellt. Das Verfahren weist folgende Schritte auf:
a) Speichern hinsichtlich wenigstens einer mobilen drahtlosen Kommunikationsendeinrichtung 30, 31, welche einem bestimmten Benutzer zugeordnet ist, benutzerbezogener Daten, wobei die benutzerbezogenen Daten Steuerdaten und/oder Mediendaten, insbesondere Sprachdaten und/oder Textdaten und/oder Videodaten und/oder Musikdaten enthalten;
b) Detektieren, mittels der wenigstens einen elektronischen Zugangseinrichtung 20, der wenigstens einen mobilen drahtlosen Kommunikationsendeinrichtung 30, 31, sobald sie im Heimnetzwerk 10 erfassbar ist;
c) Identifizieren der wenigstens einen in Schritt b) erfassten mobilen drahtlosen Kommunikationsendeinrichtung 30, 31;
d) automatisches Bereitstellen, in Abhängigkeit von der wenigstens einen in Schritt c) identifizierten mobilen drahtlosen Kommunikationsendeinrichtung 30, 31, zumindest einiger der gespeicherten benutzerbezogenen Daten wenigstens einer akustischen und/oder optischen Ausgabeeinrichtung 40, 60, die mit dem Heimnetzwerk 10 verbunden ist.

Die benutzerbezogenen Daten können im Heimnetzwerk 10 oder im Internet 70 und im Heimnetzwerk 10 gespeichert werden. Hierzu kann das Heimnetzwerk 10 eine netzgebundene Speichereinrichtung 80 aufweisen.

Die in Schritt c) bereitgestellten benutzerbezogene Daten können über die wenigstens eine akustische und/oder optische Ausgabeeinrichtung 60 ausgegeben werden. Bei der wenigstens einen akustischen und/oder optischen Ausgabeeinrichtung handelt es sich vorzugsweise um netzwerkfähige Endgeräte, wie zum Beispiel einen intelligenten Lautsprecher 60, eine intelligente Steckdose 50, ein intelligentes Fernsehgeräte 40 und beispielsweise ein oder mehrere Smartphones.

Als benutzerbezogene Daten können in Schritt c) Steuerdaten bereitgestellt werden, wobei unter Ansprechen auf die Steuerdaten von der akustischen und/oder optischen Ausgabeeinrichtung eine vorbestimmte Funktion ausgeführt werden kann. Beispielsweise kann die elektronische Zugangseinrichtung 20 dazu ausgebildet sein, unter Verarbeitung entsprechender Steuerdaten das intelligente Fernsehgeräte 40 einzuschalten und ein vorbestimmtes Fernsehprogramm auszuwählen.

Solange die wenigstens eine mobile drahtlose Kommunikationsendeinrichtung30 im Heimnetzwerk 10 erfasst wird, können in Schritt c) zu wenigstens einem vorgegebenen Zeitpunkt andere benutzerbezogene Daten der wenigstens einen akustischen und/oder optischen Ausgabeeinrichtung, beispielsweise dem intelligenten Lautsprecher 60, bereitgestellt werden.

Solange die wenigstens eine mobile drahtlose Kommunikationsendeinrichtung 30 im Heimnetzwerk 10 erfasst wird, können in Schritt a) weitere benutzerbezogene Daten, die von der wenigstens einen mobilen drahtlosen Kommunikationsendeinrichtung 30, 31 und/oder einem anderen netzwerkfähigen Endgerät, welches mit dem Heimnetzwerk 10 verbunden ist, erzeugt und gespeichert werden. Beispielsweise kann über das intelligente Fernsehgeräte 40 und das Heimnetzwerk 10 die Uhrzeit und das Fernsehprogramm erkannt werden, welches vom Nutzer der wenigstens einen mobilen drahtlosen Kommunikationsendeinrichtung 30 ausgewählt wird. Beispielsweise kann der Nutzer mittels der mobilen drahtlosen Kommunikationsendeinrichtung 30 netzwerkfähige Endgeräte des Heimnetzwerkes 10 ansteuern, wobei die entsprechenden Steuerdaten dann als benutzerbezogene Daten im Heimnetzwerk 10 oder im Internet 70 und im Heimnetzwerk 10 gespeichert werden können.

Vorzugsweise können von der wenigstens einen akustischen und/oder optischen Ausgabeeinrichtung 60 und/oder 40 mindestens einige der in Schritt a) gespeicherten benutzerbezogene Daten der wenigstens einen mobilen drahtlosen Kommunikationsendeinrichtung 30 abgerufen werden.

Vorzugsweise kann Schritt d) folgenden Schritt aufweisen: Ausgeben einer benutzerbezogenen sprachlichen Äußerung, insbesondere einer benutzerbezogene Begrüßungsformel, über die wenigstens eine akustische Ausgabeeinrichtung 60, sobald die wenigstens eine mobile drahtlose Kommunikationsendeinrichtung 30, der die benutzerbezogene sprachliche Äußerung zugeordnet ist, von der wenigstens eine elektronische Zugangseinrichtung 20 in Schritt b) detektiert und in Schritt c) identifiziert worden ist.

Die Ausgabe der benutzerbezogenen sprachlichen Äußerung wird vorzugsweise von der elektronischen Zugangseinrichtung 20 veranlasst.

Vorzugsweise kann zeitlich vor Ausführung der Schritte b) und c) mittels der wenigstens einen elektronischen Zugangseinrichtung 20 wenigstens eine andere mobile drahtlose Kommunikationsendeinrichtung 31, sobald sie im Heimnetzwerk 10 erfassbar ist, detektiert und identifiziert werden, wobei Schritt d) folgenden Schritt aufweisen kann:
Ausgeben, über die wenigstens eine akustische Ausgabeeinrichtung (60), wenigstens eines Benutzernamens, welcher der wenigstens einen anderen mobilen drahtlosen Kommunikationseinrichtung 31 zugeordnet ist, sobald die wenigstens eine mobile drahtlose Kommunikationsendeinrichtung 30 von der wenigstens eine elektronische Zugangseinrichtung 20 in Schritt b) detektiert und in Schritt c) identifiziert worden ist.

Die Ausgabe des wenigstens einen Benutzernamens wird vorzugsweise von der elektronischen Zugangseinrichtung 20 veranlasst.

Gemäß einem weiteren Aspekt wird ein Computerprogramm zur Verfügung gestellt, welches eine Vielzahl von Anweisungen umfasst. Wird das Computerprogramm durch wenigstens eine Steuereinheit 22 eines Heimnetzwerkes 10, welches wenigstens eine elektronische Zugangseinrichtung 20 mit einer drahtlosen Kommunikation Schnittstelle 21, eine mobile drahtlose Kommunikationsendeinrichtung 30 und wenigstens eine akustische und/oder optische Ausgabeeinrichtung 60 und/oder 40 aufweist, ausgeführt, so wird die Steuereinheit 22 durch die Anweisungen veranlasst, das oben beschriebene Verfahren auszuführen.

Gemäß einem weiteren beispielhaften Aspekt wird ein Heimnetzwerk 10 zur automatischen Bereitstellung von benutzerbezogenen Daten geschaffen, welches wenigstens eine elektronische Zugangseinrichtung 20 mit einer drahtlosen Kommunikationsschnittstelle 21 und wenigstens eine akustische und/oder optische Ausgabeeinrichtung 40, 60 aufweist. Das Heimnetzwerk 10 ist dazu ausgebildet, das oben erläuterte Verfahren auszuführen.

## Patentansprüche

1. Verfahren zur automatischen Bereitstellung von benutzerbezogenen Daten unter Verwendung eines Heimnetzwerks (10), welches wenigstens eine elektronische Zugangseinrichtung (20) mit einer drahtlosen Kommunikationsschnittstelle (21) aufweist, mit folgenden Schritten:
a) Speichern hinsichtlich wenigstens einer mobilen drahtlosen Kommunikationsendeinrichtung (30, 31), welche einem bestimmten Benutzer zugeordnet ist, benutzerbezogener Daten, wobei die benutzerbezogenen Daten Steuerdaten und/oder Mediendaten, insbesondere Sprachdaten und/oder Textdaten und/oder Videodaten und/oder Musikdaten enthalten, und wobei die benutzerbezogenen Daten im Heimnetzwerk (10) oder im Internet (70) und im Heimnetzwerk (10) gespeichert werden;
b) Detektieren, mittels der wenigstens einen elektronischen Zugangseinrichtung (20), der wenigstens einen mobilen drahtlosen Kommunikationsendeinrichtung (30, 31), sobald sie im Heimnetzwerk (10) erfassbar ist;
c) Identifizieren der wenigstens einen in Schritt b) erfassten mobilen drahtlosen Kommunikationsendeinrichtung (30);
d) veranlasst durch die wenigstens eine elektronische Zugangseinrichtung (20), automatisches Bereitstellen, in Abhängigkeit von der wenigstens einen in Schritt c) identifizierten mobilen drahtlosen Kommunikationsendeinrichtung (30, 31), zumindest einiger der gespeicherten benutzerbezogenen Daten wenigstens einer akustischen und/oder optischen Ausgabeeinrichtung (40, 60), die mit dem Heimnetzwerk (10) verbunden ist.

2. Verfahren nach Anspruch 1,
**dadurch gekennzeichnet, dass**
die in Schritt d) bereitgestellten benutzerbezogenen Daten über die wenigstens eine akustische und/oder optische Ausgabeeinrichtung (40, 60) ausgegeben werden.

3. Verfahren nach Anspruch 1,
**dadurch gekennzeichnet, dass**
die in Schritt d) bereitgestellten benutzerbezogenen Daten Steuerdaten sind, und dass
unter Ansprechen auf die Steuerdaten von der wenigstens einen akustischen und/oder optischen Ausgabeeinrichtung (40, 60) eine vorbestimmte Funktion ausgeführt wird.

4. Verfahren nach einem der vorstehenden Ansprüche,
**dadurch gekennzeichnet, dass**,
solange die wenigstens eine mobile drahtlose Kommunikationsendeinrichtung (30) im Heimnetzwerk (10) erfasst wird, in Schritt d) zu wenigstens einem vorgegebenen Zeitpunkt benutzerbezogene Daten der wenigstens einen akustischen und/oder optischen Ausgabeeinrichtung (40, 60) bereitgestellt werden.

5. Verfahren nach einem der vorstehenden Ansprüche,
**dadurch gekennzeichnet, dass**
solange die wenigstens eine mobile drahtlose Kommunikationsendeinrichtung (30) im Heimnetzwerk (10) erfasst wird, in Schritt a) weitere benutzerbezogene Daten, die von der wenigstens einen mobilen drahtlosen Kommunikationsendeinrichtung (30) erzeugt werden, gespeichert werden.

6. Verfahren nach einem der vorstehenden Ansprüche,
**dadurch gekennzeichnet, dass**
von der wenigstens einen akustischen und/oder optischen Ausgabeeinrichtung (40, 60) zumindest einige der in Schritt a) gespeicherten benutzerbezogenen Daten der wenigstens einen mobilen drahtlosen Kommunikationsendeinrichtung abgerufen werden.

7. Verfahren nach einem der vorstehenden Ansprüche,
**dadurch gekennzeichnet, dass**
die wenigstens eine akustische und/oder optische Ausgabeeinrichtung ein intelligenter Lautsprecher (60), ein Smart-TV (40) oder ein Rechner sein kann, dass
die wenigstens eine mobile drahtlose Kommunikationsendeinrichtung (30) ein Smartphone sein kann, und dass
die wenigstens eine elektronische Zugangseinrichtung (20) als Router ausgebildet sein kann, der ferner einen Internet-Anschluss (23) aufweisen kann.

8. Verfahren nach einem der vorstehenden Ansprüche,
**dadurch gekennzeichnet, dass**,
Schritt d) folgenden Schritt aufweist:
Ausgeben einer benutzerbezogenen sprachlichen Äußerung, insbesondere einer benutzerbezogene Begrüßungsformel, über die wenigstens eine akustische Ausgabeeinrichtung (60), sobald die wenigstens eine mobile drahtlose Kommunikationsendeinrichtung (30), der die benutzerbezogene sprachliche Äußerung zugeordnet ist, von der wenigstens eine elektronische Zugangseinrichtung (20) in Schritt b) detektiert und in Schritt c) identifiziert worden ist.

9. Verfahren nach einem der vorstehenden Ansprüche,
**dadurch gekennzeichnet, dass**
zeitlich vor Ausführung der Schritte b) und c) mittels der wenigstens einen elektronischen Zugangseinrichtung (20) wenigstens eine andere mobile drahtlose Kommunikationsendeinrichtung (31) detektiert und identifiziert wird, und dass
Schritt d) folgenden Schritt aufweist:
Ausgeben, über die wenigstens eine akustische Ausgabeeinrichtung (60), wenigstens eines Benutzernamens, welcher der wenigstens einen anderen mobilen drahtlosen Kommunikationseinrichtung (31) zugeordnet ist, sobald die wenigstens eine mobile drahtlose Kommunikationsendeinrichtung (30) von der wenigstens eine elektronische Zugangseinrichtung (20) in Schritt b) detektiert und in Schritt c) identifiziert worden ist.

10. Heimnetzwerk (10) zur automatischen Bereitstellung von benutzerbezogenen Daten, aufweisend:
wenigstens eine elektronische Zugangseinrichtung (20) mit einer drahtlosen Kommunikationsschnittstelle (21), wenigstens eine akustische und/oder optische Ausgabeeinrichtung (40, 60),
**dadurch gekennzeichnet, dass**
das Heimnetzwerk (10) dazu ausgebildet ist, das Verfahren nach einem der vorstehenden Ansprüche auszuführen.

11. Computerprogramm,
umfassend eine Vielzahl von Anweisungen, welche bei Ausführung des Computerprogramms durch wenigstens eine Steuereinheit (22) eines Heimnetzwerks (10), welches wenigstens eine elektronische Zugangseinrichtung (20) mit einer drahtlosen Kommunikationsschnittstelle (21), eine mobile drahtlose Kommunikationsendeinrichtung (30, 31) und wenigstens eine akustische und/oder optische Ausgabeeinrichtung (40, 60) aufweist, die Steuereinheit (22) veranlassen, das Verfahren nach einem der Ansprüche 1 bis 9 auszuführen.

## Claims

1. A method for automatically providing user-related data using a home network (10) having at least one electronic access device (20) with a wireless communication interface (21), comprising the following steps:
a) storing, with respect to at least one mobile wireless communication terminal device (30, 31) associated with a specific user, user-related data, wherein the user-related data comprises control data and/or media data, in particular voice data and/or text data and/or video data and/or music data, and wherein the user-related data is stored in the home network (10) or in the Internet (70) and in the home network (10);
b) detecting, by means of the at least one electronic access device (20), the at least one mobile wireless communication terminal (30, 31) as soon as it is detectable in the home network (10);
c) identifying the at least one mobile wireless communication terminal device (30) detected in step b) ;
d) caused by the at least one electronic access device (20), automatically providing, in dependence on the at least one mobile wireless communication terminal device (30, 31) identified in step c), at least some of the stored user-related data to at least one acoustic and/or optical output device (40, 60) connected to the home network (10).

2. The method according to claim 1,
**characterized in that**
the user-related data provided in step d) is output via the at least one acoustic and/or optical output device (40, 60).

3. The method according to claim 1,
**characterized in that**
the user-related data provided in step d) is control data, and **in that**
a predetermined function is executed by the at least one acoustic and/or optical output device (40, 60) in response to the control data.

4. The method according to any one of the preceding claims,
**characterized in that**
as long as the at least one mobile wireless communication terminal device (30) is detected in the home network (10), in step d) user-related data is provided to the at least one acoustic and/or optical output device (40, 60) at at least one predetermined time.

5. The method according to any one of the preceding claims,
**characterized in that**
as long as the at least one mobile wireless communication terminal device (30) is detected in the home network (10), in step a) further user-related data is stored, which is generated by the at least one mobile wireless communication terminal device (30).

6. The method according to any one of the preceding claims,
**characterized in that**
at least some of the user-related data of the at least one mobile wireless communication terminal device stored in step a) are retrieved by the at least one acoustic and/or optical output device (40, 60).

7. The method according to any one of the preceding claims,
**characterized in that**
the at least one acoustic and/or optical output device can be an intelligent loudspeaker (60), a smart TV (40) or a computer, **in that**
the at least one mobile wireless communication terminal device (30) can be a smartphone, and **in that** the at least one electronic access device (20) can be designed as a router, which can further have an Internet connection (23).

8. The method according to any one of the preceding claims,
**characterized in that**
step d) comprises the following step:
outputting a user-related verbal expression, in particular a user-related greeting formula, via the at least one acoustic output device (60) as soon as the at least one mobile wireless communication terminal device (30) to which the user-related verbal expression is assigned has been detected by the at least one electronic access device (20) in step b) and identified in step c).

9. The method according to any one of the preceding claims,
**characterized in that**
before steps b) and c) are carried out at least one other mobile wireless communication terminal device (31) is detected and identified by means of the at least one electronic access device (20),
and **in that**
step d) comprises the following step:
outputting, via the at least one acoustic output device (60), at least one user name which is assigned to the at least one other mobile wireless communication terminal device (31) as soon as the at least one mobile wireless communication terminal device (30) has been detected by the at least one electronic access device (20) in step b) and
identified in step c).

10. A home network (10) for automatically providing user-related data, comprising
at least one electronic access device (20) with a wireless communication interface (21), at least one acoustic and/or optical output device (40, 60), **characterized in that**
the home network (10) is adapted to perform the method according to one of the preceding claims.

11. A computer program,
comprising a plurality of instructions which, when the computer program is executed by at least one control unit (22) of a home network (10), said home network (10) comprising at least one electronic access device (20) with a wireless communication interface (21), a mobile wireless communication terminal device (30, 31) and at least one acoustic and/or optical output device (40, 60), cause the control unit (22) to perform the method according to any one of claims 1 to 9.

## Revendications

1. Procédé pour fournir automatiquement des données orientées utilisateur en utilisant un réseau domestique (10), lequel présente au moins un système d'accès électronique (20) avec une interface de communication sans fil (21), avec des étapes suivantes :
a) de stockage, quant à au moins un système terminal de communication sans fil mobile (30, 31), lequel est associé à un utilisateur défini, de données orientées utilisateur, dans lequel les données orientées utilisateur contiennent des données de commande et/ou des données multimédias, en particulier des données vocales et/ou des données de texte et/ou des données vidéo et/ou des données musicales, et dans lequel les données orientées utilisateur sont stockées dans le réseau domestique (10) ou dans l'Internet (70) et dans le réseau domestique (10) ;
b) de détection, au moyen de l'au moins un système d'accès électronique (20), de l'au moins un système terminal de communication sans fil mobile (30, 31) dès qu'il peut être détecté dans le réseau domestique (10) ;
c) d'identification de l'au moins un système terminal de communication sans fil mobile (30) détecté lors de l'étape b) ;
d) de fourniture automatique, sur déclenchement par l'au moins un système d'accès électronique (20), en fonction de l'au moins un système terminal de communication sans fil mobile (30, 31) identifié lors de l'étape c), d'au moins certaines des données orientées utilisateur stockées d'au moins un système d'émission acoustique et/ou optique (40, 60), qui est relié au réseau domestique (10).

2. Procédé selon la revendication 1,
**caractérisé en ce que**
les données orientées utilisateur fournies lors de l'étape d) sont émises par l'intermédiaire de l'au moins un système d'émission acoustique et/ou optique (40, 60).

3. Procédé selon la revendication 1,
**caractérisé en ce que**
les données orientées utilisateur fournies lors de l'étape d) sont des données de commande, et qu'en réponse aux données de commande, une fonction prédéfinie est exécutée par l'au moins un système d'émission acoustique et/ou optique (40, 60) .

4. Procédé selon l'une quelconque des revendications précédentes,
**caractérisé en ce que**
tant que l'au moins un système terminal de communication sans fil mobile (30) est détecté dans le réseau domestique (10), des données orientées utilisateur de l'au moins un système d'émission acoustique et/ou optique (40, 60) sont fournies à au moins un moment spécifié lors de l'étape d).

5. Procédé selon l'une quelconque des revendications précédentes,
**caractérisé en ce que**
tant que l'au moins un système terminal de communication sans fil mobile (30) est détecté dans le réseau domestique (10), d'autres données orientées utilisateur, qui sont générées par l'au moins un système terminal de communication sans fil mobile (30), sont stockées lors de l'étape a).

6. Procédé selon l'une quelconque des revendications précédentes,
**caractérisé en ce que**
au moins certaines données orientées utilisateur stockées lors de l'étape a) de l'au moins un système terminal de communication sans fil mobile sont consultées par l'au moins un système d'émission acoustique et/ou optique (40, 60) .

7. Procédé selon l'une quelconque des revendications précédentes,
**caractérisé en ce que**
l'au moins un système d'émission acoustique et/ou optique peut être un haut-parleur intelligent (60), un téléviseur intelligent (40) ou un ordinateur,
que l'au moins un système terminal de communication sans fil mobile (30) peut être un téléphone intelligent, et que
l'au moins un système d'accès électronique (20) peut être réalisé en tant que routeur, qui peut présenter en outre une borne Internet (23).

8. Procédé selon l'une quelconque des revendications précédentes,
**caractérisé en ce que**
l'étape d) présente l'étape suivante :
d'émission d'une expression linguistique orientée utilisateur, en particulier d'une formule de salutation orientée utilisateur, par l'intermédiaire de l'au moins un système d'émission acoustique (60) dès que l'au moins un système terminal de communication sans fil mobile (30), auquel l'expression linguistique orientée utilisateur est associée, a été détecté lors de l'étape b) par l'au moins un système d'accès électronique (20) et a été identifié lors de l'étape c) .

9. Procédé selon l'une quelconque des revendications précédentes,
**caractérisé en ce que**
au moins un autre système terminal de communication sans fil mobile (31) est détecté et identifié de manière temporelle avant l'exécution des étapes b) et c) au moyen de l'au moins un système d'accès électronique (20), et que
l'étape d) présente l'étape suivante :
d'émission, par l'intermédiaire de l'au moins un système d'émission acoustique (60), d'au moins un nom d'utilisateur, lequel est associé à l'au moins un autre système terminal de communication mobile sans fil (31) dès que l'au moins un système terminal de communication sans fil mobile (30) a été détecté par l'au moins un système d'accès électronique (20) lors de l'étape b) et a été identifié lors de l'étape c) .

10. Réseau domestique (10) pour fournir automatiquement des données orientées utilisateur, présentant :
au moins un système d'accès électronique (20) avec une interface de communication sans fil (21),
au moins un système d'émission acoustique et/ou optique (40, 60),
**caractérisé en ce que**
le réseau domestique (10) est réalisé pour exécuter le procédé selon l'une quelconque des revendications précédentes.

11. Programme informatique,
comprenant une pluralité d'instructions, lesquelles amènent l'unité de commande (22) à exécuter le procédé selon l'une quelconque des revendications 1 à 9, lors de l'exécution du programme informatique par au moins une unité de commande (22) d'un réseau domestique (10), lequel présente au moins un système d'accès électronique (20) avec une interface de communication sans fil (21), un système terminal de communication sans fil mobile (30, 31) et au moins un système d'émission acoustique et/ou optique (40, 60).
